# EUROPEAN PATENT APPLICATION

(11) **EP 4 517 517 A1**
(43) Date of publication of application: **05.03.2025**
(21) Application number: 23823112.0
(22) Date of filing: 13.06.2023
(51) Int. Cl.: G06F 8/34

(54) **COMPONENT PREVIEW METHOD AND ELECTRONIC DEVICE**

(30) Priority: 16.06.2022 CN 202210721061
(71) Applicant: Huawei Technologies Co., Ltd., Shenzhen, Guangdong 518129 (CN)
(72) Inventor: CHEN, Benzhi, Shenzhen, Guangdong 518129 (CN); LAN, Shouren, Shenzhen, Guangdong 518129 (CN); LI, Hao, Shenzhen, Guangdong 518129 (CN); WU, Haibin, Shenzhen, Guangdong 518129 (CN); YANG, Jiandong, Shenzhen, Guangdong 518129 (CN); YU, Zhiqiang, Shenzhen, Guangdong 518129 (CN)
(74) Representative: Körber, Martin Hans
(86) International application number: PCT/CN2023/099838
(87) International publication number: WO 2023/241544

(57) **Abstract**

Embodiments of this application provide a component preview method and an electronic device. The method is applied to the electronic device and includes: determining a first preview component based on a code file, where the code file includes a plurality of components, and the first preview component is one of the plurality of components; determining a first drawing layer based on the first preview component, where the first drawing layer includes a first drawing instruction; and determining a first texture image according to the first drawing instruction. According to the component preview method and the electronic device provided in this application, stacked-up components can be fully previewed, and dynamic preview of the components is supported. This improves component preview efficiency and achieves a better component preview effect.

## Description

This application claims priority to Chinese Patent Application No. 202210721061.1, filed with the China National Intellectual Property Administration on June 16, 2022 and entitled "COMPONENT PREVIEW METHOD AND ELECTRONIC DEVICE", which is incorporated herein by reference in its entirety.

### TECHNICAL FIELD

Embodiments of this application relate to the field of electronic devices, and more specifically, to a component preview method and an electronic device.

### BACKGROUND

At present, when an application developer develops application user interfaces (user interfaces, UIs) on different electronic devices, connections to different electronic device entities (for example, a mobile phone, a tablet computer, a television, a car, or a smartwatch) are required. When the developer needs to perform commissioning on the UIs on the plurality of electronic devices at the same time, connections to the plurality of different electronic devices are required. This increases development costs and reduces development efficiency.

Personal computer (personal computer, PC) preview is a technology for displaying page rendering content in a PC window. The technology does not require connections to a plurality of electronic device entities when UIs on the plurality of electronic devices are commissioned. A developer can quickly build application UIs on a plurality of electronic devices by using the PC preview technology. This can improve HarmonyOS application development experience, attract more HarmonyOS application developers, and further boost HarmonyOS application ecology.

At present, PC preview is mainly classified into two types: page preview and component preview. The page preview is preview of all components on an entire page, and the page may include one or more components. The component preview is separate preview of a component on a page. A developer can view an overall designed UI effect in real time through page preview. However, attributes of some components on a page greatly affect a layout of other components on the page. When the developer configures an attribute of a specified component on the page, an expected UI effect of the component cannot be viewed sometimes. This brings troubles to the developer in commissioning, resulting in low application development efficiency. The existing page preview cannot meet a requirement of the developer on application commissioning.

Therefore, at present, how to achieve an efficient component preview method to meet a requirement of a developer on application commissioning is a problem to be urgently resolved.

### SUMMARY

Embodiments of this application provide a component preview method. The method can improve component preview efficiency.

According to a first aspect, a component preview method is provided. The method is applied to an electronic device and includes: determining a first preview component based on a code file, where the code file includes a plurality of components, and the first preview component is one of the plurality of components; determining a first drawing layer based on the first preview component, where the first drawing layer includes a first drawing instruction; and determining a first texture image according to the first drawing instruction.

It should be understood that the first preview component is obtained through selection from a plurality of preview components. For example, a compilation toolchain of an operating system preprocesses the code file to generate an executable file, and considers a component marked with @Preview in the code file as a preview component. A drawing layer is created for each preview component, and a drawing instruction in the drawing layer is rasterized, to obtain a texture image corresponding to the preview component.

In embodiments of this application, a preview component is selected, a corresponding drawing layer is created for the preview component, and finally a drawing command in the drawing layer is rasterized, to obtain a texture image. This can improve component preview efficiency and help a developer achieve a better component preview effect during component preview.

With reference to the first aspect, in some implementations of the first aspect, a second preview component is determined based on the code file, where the second preview component is one of the plurality of components, and the second preview component is different from the first preview component; a second drawing layer is determined based on the second preview component, where the second drawing layer is different from the first drawing layer, and the second drawing layer includes a second drawing instruction; and a second texture image is determined according to the second drawing instruction.

It should be understood that the second preview component is another component marked with @Preview in the code file in addition to the first preview component. The electronic device may further process the selected second preview component, to create a drawing layer corresponding to the second preview component. The drawing layer corresponding to the second preview component is different from a drawing layer corresponding to the first preview component. To be specific, different preview components correspond to different drawing layers, and correspondingly, different preview components correspond to different drawing instructions. Therefore, the electronic device may rasterize different drawing instructions, to obtain different texture images.

In embodiments of this application, one or more preview components are selected, a separate drawing layer is generated for each preview component, and a drawing instruction in the drawing layer corresponding to each preview component is rasterized, to obtain a texture image corresponding to the preview component. When a plurality of stacked-up components need to be previewed, a drawing layer corresponding to each preview component can be separately processed, to obtain a separate preview result of each preview component. In this way, different stacked-up preview components can be fully previewed, and component preview efficiency is improved.

With reference to the first aspect, in some implementations of the first aspect, a first preview image is displayed based on the first texture image; or a second preview image is displayed based on the second texture image.

It should be understood that preview images corresponding to different preview components may be displayed in a component preview interface. The preview images corresponding to different preview components are obtained by separate processing. Therefore, when a plurality of components are stacked up, the preview components can be separately processed to obtain preview images that are finally separate from each other.

In embodiments of this application, different preview components are separately processed, so that preview images that are separate from each other can be finally obtained. This can avoid that a plurality of components affect each other during preview, so that each preview component can fully and accurately display a preview image.

With reference to the first aspect, in some implementations of the first aspect, the determining a first drawing layer based on the first preview component includes: determining a first component node based on the first preview component, where the first component node is used to represent data of the first preview component; determining a first element node based on the first component node; determining a first render node based on the first element node, where the first element node is used to associate the first component node with the first render node; and determining the first drawing layer based on the first render node, where the first drawing instruction in the first drawing layer is determined by the first render node.

It should be understood that the data of the first preview component may be one or more of an attribute, an event, or a method of the first preview component. The data of the first preview component may be used to describe an appearance of the first preview component. An element node (for example, the first element node) corresponding to the first preview component may be used to create a corresponding render node. There is a correspondence among the component node, the element node, and the render node. The render node (for example, the first render node) may be used to determine a corresponding drawing layer and drawing instruction, and the drawing instruction may be carried on the drawing layer. The render node may be further used to maintain rendering information (or drawing information), including layout information, a drawing instruction, and the like, of a corresponding preview component.

In embodiments of this application, a drawing layer and a drawing instruction that correspond to each preview component may be created. As separate drawing layers and drawing instructions are created, preview images of different preview components can be obtained by using the component preview method in embodiments of this application.

With reference to the first aspect, in some implementations of the first aspect, before the determining the first drawing layer based on the first render node, the method further includes: determining first layout information based on the first render node, where the first layout information includes first size information or first location information, and the first drawing layer includes the first layout information.

It should be understood that the layout information indicates an initial size or location of a preview component. The layout information may be obtained by the electronic device through calculation, or may be an initial value set by default. Both the layout information and the drawing information may be located in a drawing layer.

With reference to the first aspect, in some implementations of the first aspect, the first preview component is bound to the data of the first preview component; when a change of the data of the first preview component is detected, a second component node is determined based on the change of the data of the first preview component; a second element node is determined based on the second component node; a second render node is determined based on the second element node, where the second element node is used to associate the second component node with the second render node; second layout information is determined based on the second render node, where the second layout information includes second size information or second location information; and a third drawing layer is determined based on the second render node, where the third drawing layer includes a third drawing instruction and the second layout information, and the third drawing instruction is determined by the second render node.

In embodiments of this application, when data of a preview component changes, a component node corresponding to the preview component may be recreated, and a corresponding element node, render node, and layout information may be updated. In this way, a new drawing layer and a new drawing instruction can be determined based on updated information. In other words, when a change of the data of the preview component is detected, related drawing information of the preview component can be updated in real time, so that a preview image corresponding to the preview component can be updated in real time as the data changes. In this way, a developer can dynamically learn a change of a preview effect of the preview component.

With reference to the first aspect, in some implementations of the first aspect, a third texture image is determined according to the third drawing instruction, where the third texture image is different from the first texture image.

With reference to the first aspect, in some implementations of the first aspect, a third preview image is displayed based on the third texture image, where the third preview image is an image obtained by updating the first preview image.

It should be understood that, when the data of the first preview component changes, a changed texture image may be obtained, that is, the updated third texture image is obtained, so that the updated third preview image may be displayed.

With reference to the first aspect, in some implementations of the first aspect, that a change of the data of the first preview component is detected includes: associating the change of the data with the first preview component in response to an operation of a developer on the first preview image; and when the change of the data is associated with the first preview component, detecting the change of the data of the first preview component.

For example, it may be determined in this case, with an operation of a developer clicking the first preview image, that the data of the first preview component has changed, so that the changed third preview image can be directly obtained in a preview interface.

It should be understood that the developer may dynamically preview any preview component, for example, the first preview component or the second preview component in the plurality of preview components.

With reference to the first aspect, in some implementations of the first aspect, the first drawing layer includes a first canvas, and the first canvas includes the first layout information and the first drawing instruction; and the third drawing layer includes a second canvas, and the second canvas includes the second layout information and the third drawing instruction.

It should be understood that a drawing layer corresponding to a preview component may further include a canvas, and the canvas may record layout information and a drawing instruction.

According to a second aspect, an electronic device is provided, including one or more processors and one or more memories. The one or more memories store one or more computer programs, the one or more computer programs include instructions, and when the instructions are executed by the one or more processors, the electronic device is enabled to perform the following steps: determining a first preview component based on a code file, where the code file includes a plurality of components, and the first preview component is one of the plurality of components; determining a first drawing layer based on the first preview component, where the first drawing layer includes a first drawing instruction; and determining a first texture image according to the first drawing instruction.

With reference to the second aspect, in some implementations of the second aspect, a second preview component is determined based on the code file, where the second preview component is one of the plurality of components, and the second preview component is different from the first preview component; a second drawing layer is determined based on the second preview component, where the second drawing layer is different from the first drawing layer, and the second drawing layer includes a second drawing instruction; and a second texture image is determined according to the second drawing instruction.

With reference to the second aspect, in some implementations of the second aspect, when the instructions are executed by the one or more processors, the electronic device is enabled to perform the following steps: displaying a first preview image based on the first texture image; or displaying a second preview image based on the second texture image.

With reference to the second aspect, in some implementations of the second aspect, the determining a first drawing layer based on the first preview component includes: When the instructions are executed by the one or more processors, the electronic device is enabled to perform the following steps: determining a first component node based on the first preview component, where the first component node is used to represent data of the first preview component; determining a first element node based on the first component node; determining a first render node based on the first element node, where the first element node is used to associate the first component node with the first render node; and determining the first drawing layer based on the first render node, where the first drawing instruction in the first drawing layer is determined by the first render node.

With reference to the second aspect, in some implementations of the second aspect, before the determining the first drawing layer based on the first render node, when the instructions are executed by the one or more processors, the electronic device is enabled to perform the following steps: determining first layout information based on the first render node, where the first layout information includes first size information or first location information, and the first drawing layer includes the first layout information.

With reference to the second aspect, in some implementations of the second aspect, the first preview component is bound to the data of the first preview component; when a change of the data of the first preview component is detected, a second component node is determined based on the change of the data of the first preview component; a second element node is determined based on the second component node; a second render node is determined based on the second element node, where the second element node is used to associate the second component node with the second render node; second layout information is determined based on the second render node, where the second layout information includes second size information or second location information; and a third drawing layer is determined based on the second render node, where the third drawing layer includes a third drawing instruction and the second layout information, and the third drawing instruction is determined by the second render node.

With reference to the second aspect, in some implementations of the second aspect, when the instructions are executed by the one or more processors, the electronic device is enabled to perform the following step: determining a third texture image according to the third drawing instruction, where the third texture image is different from the first texture image.

With reference to the second aspect, in some implementations of the second aspect, when the instructions are executed by the one or more processors, the electronic device is enabled to perform the following step: displaying a third preview image based on the third texture image, where the third preview image is an image obtained by updating the first preview image.

With reference to the second aspect, in some implementations of the second aspect, that a change of the data of the first preview component is detected includes: When the instructions are executed by the one or more processors, the electronic device is enabled to perform the following steps: associating the change of the data with the first preview component in response to an operation of a developer on the first preview image; and when the change of the data is associated with the first preview component, detecting the change of the data of the first preview component.

With reference to the second aspect, in some implementations of the second aspect, the first drawing layer includes a first canvas, and the first canvas includes the first preview component, the first layout information, and the first drawing instruction; and the third drawing layer includes a second canvas, and the second canvas includes the second layout information and the third drawing instruction.

According to a third aspect, a computer-readable storage medium is provided. The computer-readable storage medium includes a computer program or instructions. When the computer program or the instructions are run on a computer, the method according to any one of the first aspect or the possible implementations of the first aspect is performed.

According to a fourth aspect, a computer program product is provided. The computer program product includes a computer program or instructions. When the computer program or the instructions are run on a computer, the method according to any one of the first aspect or the possible implementations of the first aspect is performed.

According to a fifth aspect, a computer program is provided. When the computer program is run on a computer, the method according to any one of the first aspect and the possible implementations of the first aspect is performed.

### BRIEF DESCRIPTION OF DRAWINGS

FIG. 1 is a diagram of a structure of an electronic device;
FIG. 2 is a block diagram of a software structure of an electronic device according to an embodiment of this application;
FIG. 3 is a diagram in which dynamic component preview is not supported according to an embodiment of this application;
FIG. 4 is a diagram in which a preview image corresponding to a single component cannot be separately and fully previewed and displayed according to an embodiment of this application;
FIG. 5 is a diagram of component preview in SwiftUI;
FIG. 6 is a diagram of component preview in Jetpack Compose;
FIG. 7 is a system framework diagram of an electronic device according to an embodiment of this application;
FIG. 8 is a module framework diagram of an electronic device according to an embodiment of this application;
FIG. 9 is a schematic flowchart of a component preview method 900 according to an embodiment of this application;
FIG. 10 is a schematic flowchart of another component preview method 1000 according to an embodiment of this application;
FIG. 11 is a diagram of a component preview effect according to an embodiment of this application;
FIG. 12 is a diagram of another component preview effect according to an embodiment of this application;
FIG. 13 is a diagram of comparison between component preview methods according to an embodiment of this application; and
FIG. 14 is a schematic flowchart of a component preview method 1400 according to an embodiment of this application.

### DESCRIPTION OF EMBODIMENTS

Technical solutions in embodiments of this application are described below with reference to the accompanying drawings.

Terms used in the following embodiments are merely intended to describe specific embodiments, but are not intended to limit this application. As used in the description and the appended claims of this application, the terms "one", "a", "the", "this" of singular forms are intended to further include expressions such as "one or more", unless otherwise specified in the context clearly. It should be further understood that in the following embodiments of this application, "at least one" and "one or more" mean one, two, or more. The term "and/or" describes an association relationship between associated objects, and indicates that three relationships may exist. For example, A and/or B may indicate the following three cases: only A exists, both A and B exist, and only B exists. A and B may be singular or plural. The character "/" usually indicates an "or" relationship between associated objects.

Reference to "an embodiment", "some embodiments", or the like described in this specification indicates that one or more embodiments of this application include a specific feature, structure, or characteristic described with reference to those embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of the embodiments", unless otherwise particularly emphasized in another manner. The terms "include", "contain", "have", and their variants all mean "include but are not limited to", unless otherwise particularly emphasized in another manner.

An electronic device, a user interface used for such an electronic device, and an embodiment for using such an electronic device are described below. In some embodiments, the electronic device may be a portable electronic device that further includes another function, for example, a personal digital assistant and/or music play function, for example, a mobile phone, a tablet computer, or a wearable electronic device (for example, a smart watch or the like) with a wireless communication function. An example embodiment of the portable electronic device includes but is not limited to a portable electronic device using iOS^{®}, Android^{®}, Microsoft^{®}, or another operating system. The portable electronic device may alternatively be another portable electronic device, for example, a laptop (Laptop) computer or the like. It should be further understood that, in some other embodiments, the foregoing electronic device may not be the portable electronic device, and may be a desktop computer.

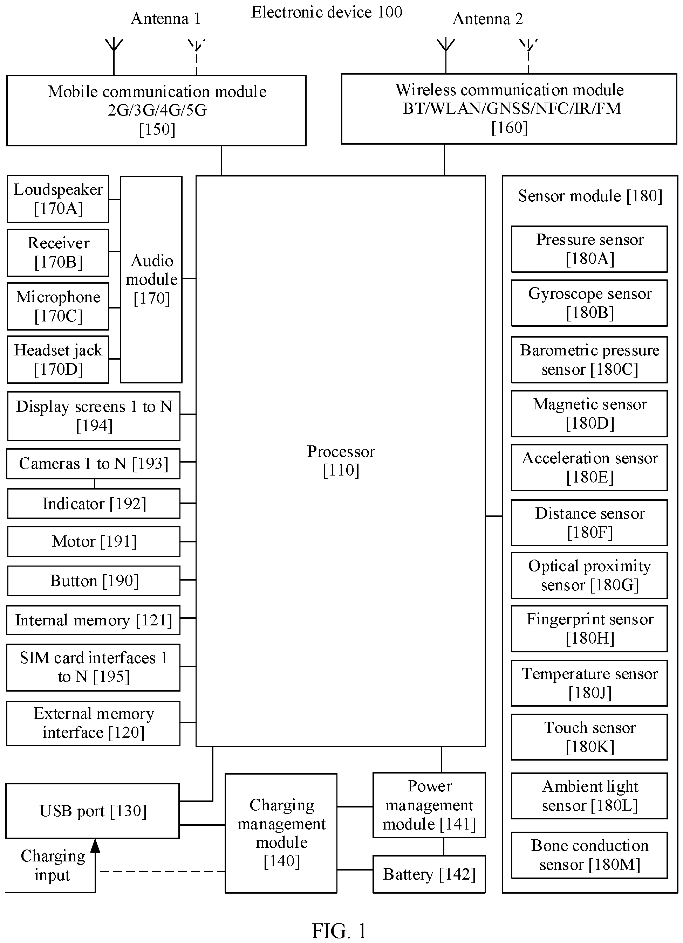

For example, FIG. 1 is a diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has just been used or is cyclically used by the processor 110. If the processor 110 needs to use the instructions or the data again, the processor may directly invoke the instructions or the data from the memory. This avoids repeated access, reduces a time for waiting of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution including 2G/3G/4G/5G that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing, for example, filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least a part of functional modules of the mobile communication module 150 may be disposed in the processor 110. In some embodiments, at least a part of functional modules of the mobile communication module 150 and at least a part of modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal that is then transferred to the application processor. The application processor outputs a sound signal through an audio device (that is not limited to the loudspeaker 170A, the receiver 170B, and the like), or displays an image or a video by using the display screen 194. In some embodiments, the modem processor may be an independent component. In some other embodiments, the modem processor may be independent of the processor 110, and is disposed with the mobile communication module 150 or another functional module in the same device.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a signal, that is to be transmitted, from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, IR, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function by using the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs that execute a program instruction to generate or change display information.

The display screen 194 is configured to display an image, a video, or the like. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), and the like. In some embodiments, the electronic device 100 may include one or N display screens 194, and N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature in a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information by learning from a structure of a biological neural network, for example, by learning from a mode of transmission between human brain neurons, and may further continuously perform self-learning. Applications such as intelligent cognition of the electronic device 100, for example, image recognition, facial recognition, speech recognition, and text understanding, may be implemented by using the NPU.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications and data processing on the electronic device 100. The internal memory 121 may include a program storage area and a data storage area. The program storage area may store an operating system, an application required for at least one function (for example, a sound play function or an image play function), and the like. The data storage area may store data (for example, audio data and an address book) and the like that are created during use of the electronic device 100. In addition, the internal memory 121 may include a high-speed random access memory, and may further include a non-volatile memory, for example, at least one magnetic disk storage device, a flash storage device, or a universal flash storage (universal flash storage, UFS).

The electronic device 100 may implement an audio function, for example, music play or recording, by using the audio module 170, the loudspeaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or a part of functional modules of the audio module 170 are disposed in the processor 110.

The loudspeaker 170A, also referred to as a "speaker", is configured to convert an electrical audio signal into a sound signal. The electronic device 100 may receive music or receive a hands-free call by using the loudspeaker 170A.

The receiver 170B, also referred to as an "earpiece", is configured to convert an electrical audio signal into a sound signal. When a call or audio information is received by the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may move the mouth close to the microphone 170C and make a sound, to input a sound signal to the microphone 170C. At least one microphone 170C may be disposed in the electronic device 100. In some other embodiments, two microphones 170C may be disposed in the electronic device 100, to collect a sound signal and further reduce noises. In some other embodiments, three, four, or more microphones 170C may alternatively be disposed in the electronic device 100, to collect a sound signal, reduce noises, and identify a sound source, to implement a directional sound recording function and the like.

The pressure sensor 180A is configured to sense a pressure signal, and may convert the pressure signal into an electrical signal. In some embodiments, the pressure sensor 180A may be disposed in the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a pressure is applied to the pressure sensor 180A, capacitance between electrodes changes. The electronic device 100 determines pressure intensity based on a capacitance change. When a touch operation is performed on the display screen 194, the electronic device 100 detects strength of the touch operation by using the pressure sensor 180A. The electronic device 100 may calculate a touch location based on a detection signal from the pressure sensor 180A. In some embodiments, touch operations that are performed at a same touch location but have different touch operation intensity may correspond to different operation instructions. For example, when a touch operation with touch operation intensity greater than or equal to a first pressure threshold acts on an alarm clock application icon, an instruction for setting a new alarm is executed.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. For example, when a mobile phone detects a touch operation of a user in a lock screen interface, the mobile phone may collect fingerprint information of the user by using the fingerprint sensor 180H, and perform matching on the collected fingerprint information and fingerprint information preset in the mobile phone. If the matching is successful, the mobile phone may enter a non-lock screen interface from the lock screen interface.

The touch sensor 180K is also referred to as a "touch panel". The touch sensor 180K may be disposed on the display screen 194. The touch sensor 180K and the display screen 194 form a touchscreen, which is also referred to as a "touch screen". The touch sensor 180K is configured to detect a touch operation performed on or near the touch sensor. The touch sensor may transfer a detected touch operation to the application processor to determine a type of the touch event. A visual output related to the touch operation may be provided through the display screen 194. In some other embodiments, the touch sensor 180K may be alternatively disposed on a surface of the electronic device 100, and is located at a location different from that of the display screen 194.

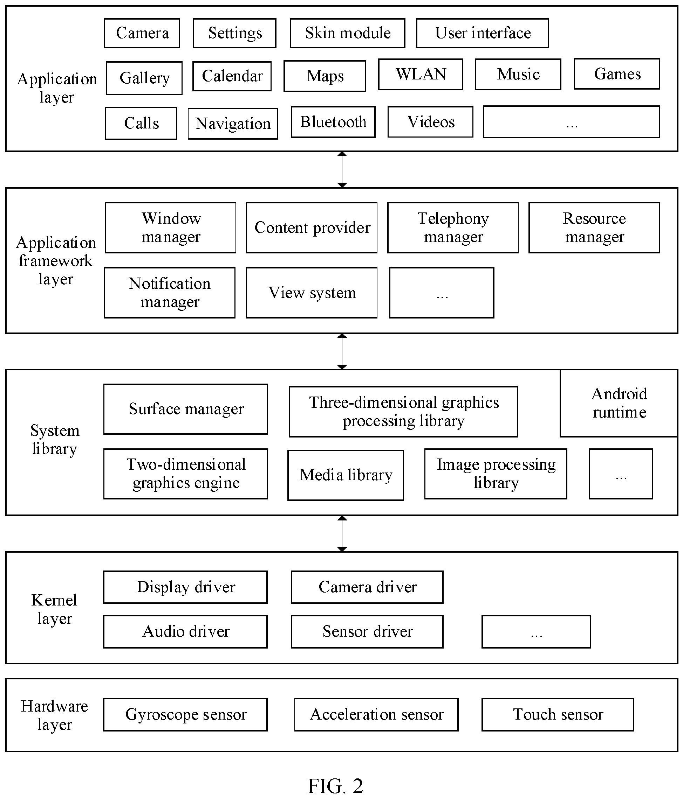

FIG. 2 is a block diagram of a software structure of an electronic device 100 according to an embodiment of this application. In a layered architecture, software is divided into several layers, and each layer has a clear-cut role and task. The layers communicate with each other through a software interface. In some embodiments, the Android system is divided from top to bottom into four layers: an application layer, an application framework layer, Android runtime (Android runtime), and a system library, and a kernel layer. The application layer may include a series of application packages.

As shown in FIG. 2, the application layer may include Camera, Settings, a skin module, a user interface (user interface, UI), a third-party application, and the like. The third-party application may include Gallery, Calendar, Calls, Maps, Navigation, WLAN, Bluetooth, Music, Videos, Messages, and the like.

The application framework layer provides an application programming interface (application programming interface, API) and a programming framework to an application at the application layer. The application framework layer may include some predefined functions.

As shown in FIG. 2, the application framework layer may include a window manager, a content provider, a view system, a telephony manager, a resource manager, a notification manager, and the like.

The window manager is used to manage a window program. The window manager may obtain a size of a display screen, determine whether there is a status bar, lock the screen, take a screenshot, and the like. The content provider is used to store and obtain data, and enable the data to be accessed by an application. The data may include a video, an image, audio, outgoing and incoming calls, a browsing history and bookmarks, contacts, and the like.

The view system includes a visual control, for example, a control for displaying text or a control for displaying images, for example, indication information used to prompt a virtual shutter button in this embodiment of this application. The view system may be used to construct an application. A display interface may include one or more views. For example, a display interface including an icon for message notification may include a text display view and an image display view.

The telephony manager is used to provide a communication function of the electronic device 100, for example, management of a call status (including answering, hanging up, and the like).

The resource manager provides various types of resources to an application, such as a localized character string, an icon, an image, a layout file, and a video file.

The notification manager enables an application to display notification information in the status bar, and may be used to transmit a notification-type message. The displayed information may automatically disappear after a short pause without user interaction. For example, the notification manager is used to notify download completion, provide a message notification, and the like. The notification manager may alternatively be a notification that appears in a status bar atop the system in a form of a graph or a scroll bar text, for example, a notification of an application run on the background, or may be a notification that appears on the screen in a form of a dialog window. For example, text information is prompted in the status bar, a prompt tone is played, the electronic device vibrates, or the indicator light blinks.

Android runtime includes a core library and a virtual machine. Android runtime is responsible for scheduling and management of the Android system.

The core library includes two parts. One of the parts is a performance function that needs to be invoked in the Java language, and the other part is a core library of Android.

The application layer and the application framework layer run on the virtual machine. The virtual machine executes Java files at the application layer and the application framework layer as binary files. The virtual machine is configured to implement functions such as object life cycle management, stack management, thread management, safety and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL)

The surface manager is used to manage a display subsystem and provide fusion of 2D and 3D layers for a plurality of applications.

The media library supports play and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

In addition, the system library may further include a status monitoring service module or the like, for example, a physical status identification module, configured to analyze and identify a user gesture; and a sensor service module, configured to monitor sensor data uploaded by various types of sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various types of sensors, for example, various types of sensors described in FIG. 1, and an acceleration sensor, a gyroscope sensor, a touch sensor, and the like in embodiments of this application.

With reference to the electronic device described in FIG. 1 and FIG. 2, in embodiments of this application, physical components related to the electronic device 100 mainly include hardware components such as a sensor, a decision support system (decision support system, DSS) display chip, a touch display screen, and a fingerprint recognition module; components in a kernel software layer, such as a screen management module, a display driver, a fingerprint driver, and anti-false touch; application framework layer functions such as anti-false touch input, screen control, an always on display (always on display, AOD) service, and power management; and application layer services such as a special adaptation application (camera), a third-party application, system suspend, and AOD.

As an existing type of PC (personal computer) preview, component preview is popular among many developers. On one hand, there is no need to preview an entire page for component preview, and a developer can customize a component for preview and set an attribute corresponding to the component. When the component is previewed, a layout of components is not affected by another component, and an expected component preview effect in a user interface (user interface, UI) is obtained. Compared with page preview, this manner of component preview has higher development and commissioning efficiency, and a developer can more conveniently perform application UI commissioning.

On the other hand, as the component preview is to load different custom components during runtime, a plurality of custom components can be previewed based on one JavaScript bundle (JS Bundle) file. In the page preview, if different custom components need to be previewed at the same time, a plurality of different JS bundle files need to be loaded. Therefore, when a preview page includes a plurality of custom components, the component preview is faster and more efficient than the page preview.

Two manners of component preview are described below. One manner is using SwiftUI. This is a new manner of building a UI and provides a new coding style. SwiftUI provides a unified UI framework on the Apple platform and can be used to develop application UIs for Apple products such as watchOS, tvOS, and macOS. The other manner is using Jetpack Compose that is a new toolkit for building native Android interfaces and simplifying interface development on Android. This can quickly build a UI with less code, powerful tools, and intuitive application programming interfaces (application programming interface, API).

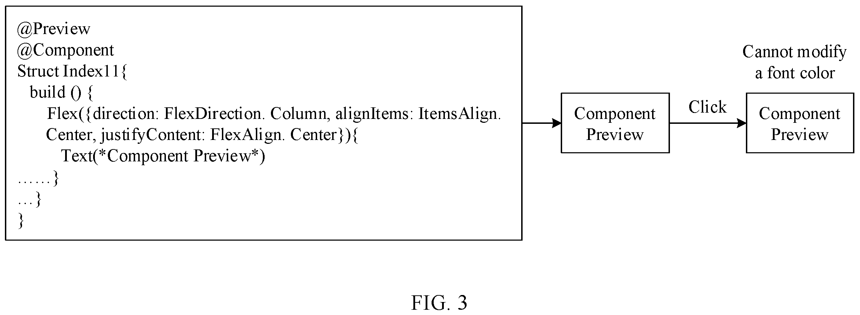

On one hand, the foregoing two preview commissioning tools can only perform static component preview. If dynamic preview needs to be supported, recompilation using a toolchain is required, and a rendering engine needs to perform re-rendering. It can be learned that the foregoing two preview commissioning tools do not support a dynamic update of a preview component, resulting in poor experience for developers and low development and commissioning efficiency. FIG. 3 is a diagram in which dynamic component preview is not supported. In a conventional solution, a click event is bound to a text component (for example, as shown in FIG. 3, text content is Component Preview), to change a text color. When the click event is triggered, the text color does not change. If a text font color needs to be changed, recompilation using a toolchain is required, to generate an executable file and then regenerate a rendering image.

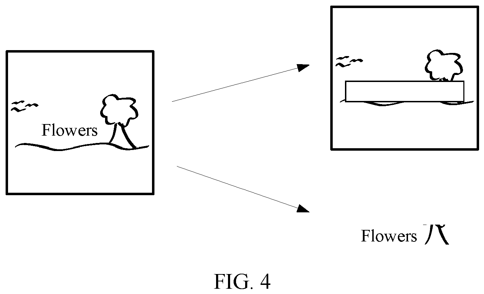

On the other hand, both SwiftUI and Jetpack Compose are to rasterize all components and component layouts on a page. When a component image is cropped by rasterizing all the components and the component layouts on the page, stacked-up components cannot be fully previewed. FIG. 4 is a diagram in which a preview image corresponding to a single component cannot be separately and fully previewed and displayed. The figure includes a preview image (for example, Flower) corresponding to a text component and an image corresponding to an image component. The preview images corresponding to the two components are stacked up. The preview image corresponding to the image component includes a white area, and the area is left after the preview image corresponding to the text component is cropped out. The text component and the image component are displayed in a same layer, and a texture image is generated after the components are rasterized together. As a result, in the foregoing process, the preview image of the text component and the preview image of the image component cannot be fully displayed. In addition, as shown in FIG. 4, because the preview image corresponding to the text component includes a part of the preview image corresponding to the image component, the preview image corresponding to the image component and the preview image corresponding to the text component cannot be fully and separately previewed.

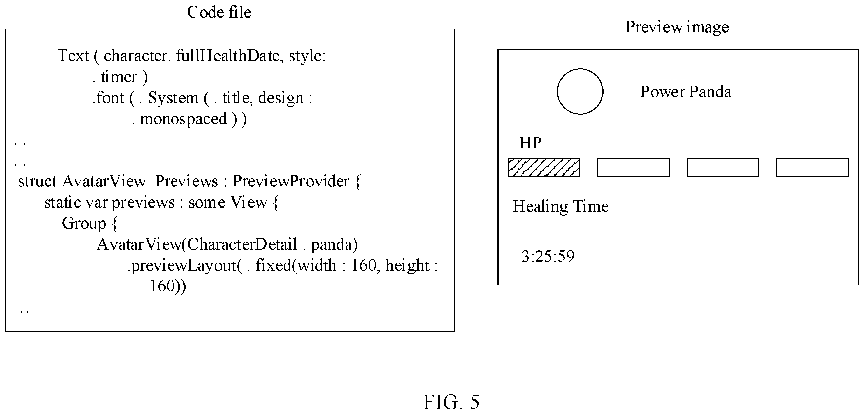

For ease of understanding, the foregoing two component preview solutions are further described below. FIG. 5 is a diagram of component preview in SwiftUI. A PreviewProvider code snippet may be used to define component content for preview, calculate a layout of a component on a page, and rasterize all components on the page, to generate a static image. Then, a static image corresponding to each component is captured from the static image based on the layout of the component for preview of a single component. Clearly, the component preview shown in FIG. 5 does not support preview of a plurality of stacked-up components, and does not support dynamic component preview. In addition, a quantity of preview components is limited in this solution. Generally, the component preview in SwiftUI supports a maximum of 10 components to be previewed at a time. If more than 10 components are to be previewed, an error is reported during compilation. Because of this, for a page, in a big application, including a large quantity of components, the quantity of components is usually more than 10, and a scenario to which the component preview in SwiftUI is applicable is greatly limited.

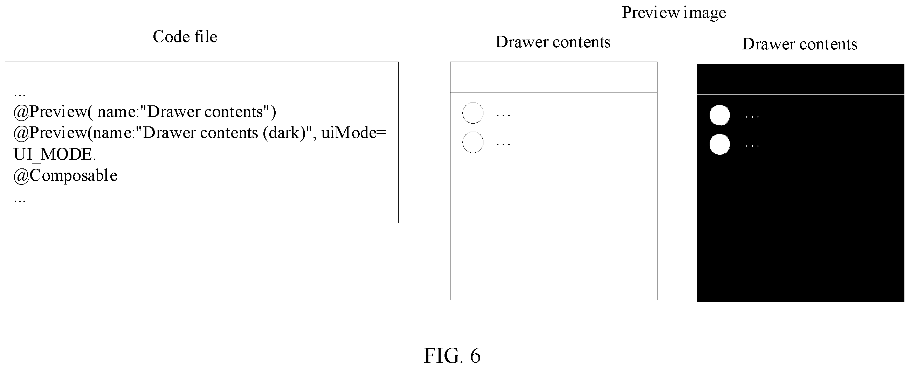

FIG. 6 is a diagram of component preview in Jetpack Compose. In this solution, a code snippet specified by a @Preview annotation may be used to define component content for preview, and all components on a page are rasterized, to generate a static image. Then, a static image corresponding to each component is captured based on a layout of the components and displayed in a preview interface. Clearly, the component preview in Jetpack Compose is similar to the component preview in SwiftUI, and does not support preview of a plurality of stacked-up components or dynamic component preview. When data of a component changes, an executable file needs to be regenerated, and information about the component cannot be dynamically updated in real time to dynamically update a UI for the component. As a result, component commissioning efficiency is low.

In conclusion, in view of problems in a conventional component preview solution, this application provides a component preview method, so that a plurality of stacked-up components can be previewed separately, and a component can be previewed dynamically in real time, to improve component preview efficiency.

Some terms in embodiments of this application are described below, to help a person skilled in the art gain a better understanding.

### Dynamic component preview

In a previewer interface, an interactive action, for example, a click event, of an application may be operated in a previewer, which is consistent with interaction experience of the application running on an actual electronic device.

### JS Bundle

JS bundle is a file obtained after a JS application written by an application developer is packaged, and includes a stream of instructions about how to build a component interface.

### Layout

A layout process is to calculate an actual size and location in relative space of each render node (RenderNode) by using various layout algorithms. When content of a node changes, the node is marked by the node as a node that needs a layout (needLayout), and perform marking upward to a layout boundary (LayoutParam) and transmission to a sub-node. Sub-nodes calculate sizes and locations from bottom to top.

### Drawing

Drawing is a deep traversal process, to traverse and invoke a drawing method corresponding to each render node. In this case, the drawing is to record a drawing command of each node in current drawing context based on a size and a location that are calculated based on a layout.

For each node, the drawing may be divided into the following steps: 1. Create drawing context and provide a canvas that can record a drawing command. 2. Record a drawing command of a background on the current canvas. 3. Recursively invoke a drawing method corresponding to a sub-node and record a drawing command of the sub-node. 4. Record a drawing command of a foreground on the current canvas.

### Rasterization

Rasterization is a process of converting vertex data into fragments, can convert an image into a raster image, and has a characteristic that each element corresponds to a pixel in a frame buffer.

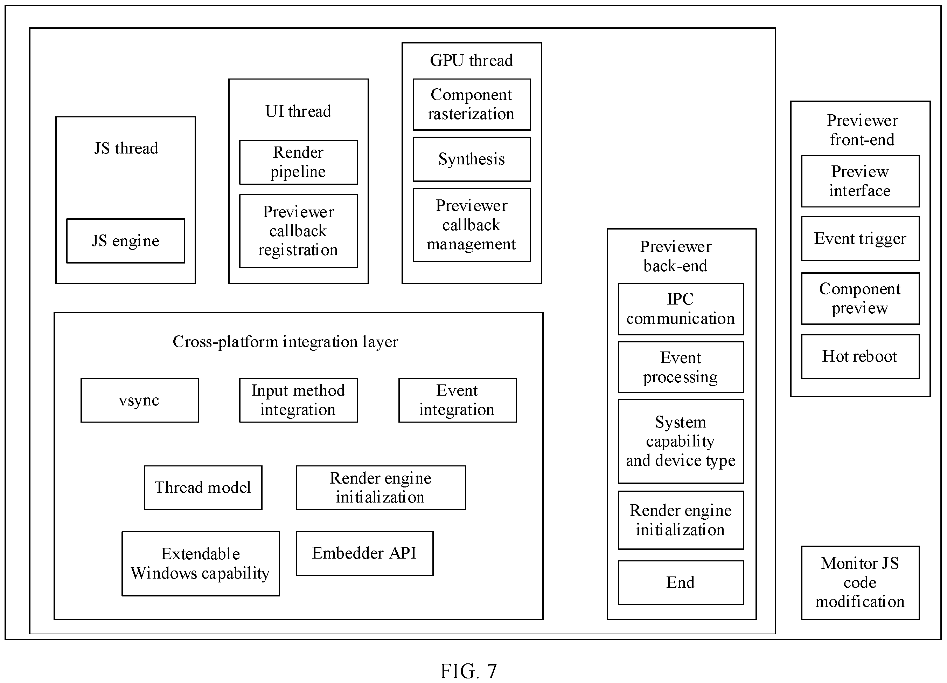

FIG. 7 shows a system framework to which an embodiment of this application is applied. The system framework may include each module or unit in FIG. 7. Main modules are component rasterization and component preview. The component rasterization is responsible for separately rasterizing a drawing instruction in a drawing layer corresponding to a preview component to obtain a texture image and sending a result obtained through the rasterization to a previewer for display. The component preview is responsible for obtaining data required by a preview component to display a texture image.

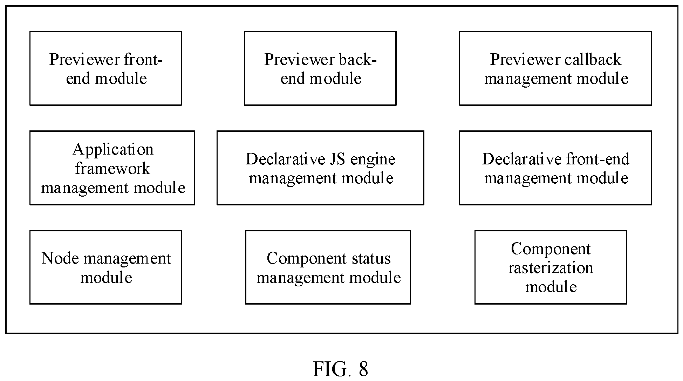

For ease of understanding, FIG. 8 shows a module framework to which an embodiment of this application is applied. The module framework mainly includes a previewer front-end module, a previewer back-end module, an application framework management module, a declarative JS engine management module, a node management module, a component status management module, a component rasterization module, and a previewer callback management module. A function of each of the modules is described below.

The previewer front-end module is configured to: obtain component preview data from the previewer back-end, display a texture image corresponding to a component, process an interface event, perform JS commissioning, and the like.

The previewer back-end module is configured to: communicate with a UI engine of an application framework, send a data obtaining instruction to the UI engine of the application framework, and obtain a texture image corresponding to a preview component rendered by the UI engine of the application framework, perform inter process communication (inter process communication, IPC), and the like.

The previewer callback management module is configured to: perform callback management on a previewer rendering result, and distribute the component rendering result of the UI engine of the application framework to the previewer back-end in real time.

The application framework management module is configured to: initialize the UI engine of the application framework, manage a life cycle, distribute events, load a preview component, perform router navigation, perform graphics library framework (Graphics Library Framework, GLFW) window management, and the like. A graphics library framework is used to create open graphics library (Open Graphics Library, OpenGL) context and operate a third-party library in a window.

The declarative JS engine management module is configured to: initialize a declarative engine instance, load JS bundle content, compile the JS bundle content into bytecode, distribute the bytecode to a JS engine for execution, and the like.

A declarative front-end management module is configured to: load a page and a resource, perform router navigation, manage a page life cycle, perform interaction between an event and the JS engine, and the like.

The node management module is configured to create and manage a component node, an element node, and a drawing node corresponding to each component. The component node may correspond to one or more pieces of information such as an attribute, an event, or a method bound to the component. The element node may be used to connect a component and a render node. The element node is in a one-to-one correspondence with the component node. After data of the component node changes, the element node may correspondingly update the changed data of the node to a corresponding node in a render tree, to rebind the node in the render tree to the data, so that a changed user interface can be obtained through rendering based on the updated render tree. The render node includes a node that may be displayed in a user interface. In addition, because information about the node is bound to a render tree, a layout, a style, and the like in the user interface may be obtained by using the render node, and a drawing command may be generated based on the render tree to render the user interface.

The component status management module is configured to: process an event, perform bidirectional data binding for a component, update a component status, distribute updated data to a UI render pipeline of the application framework, and the like.

The component rasterization module is configured to: separately rasterize a drawing instruction in a layer corresponding to a component to generate a texture image, and transfer the texture image generated through the rasterization to a previewer for display.

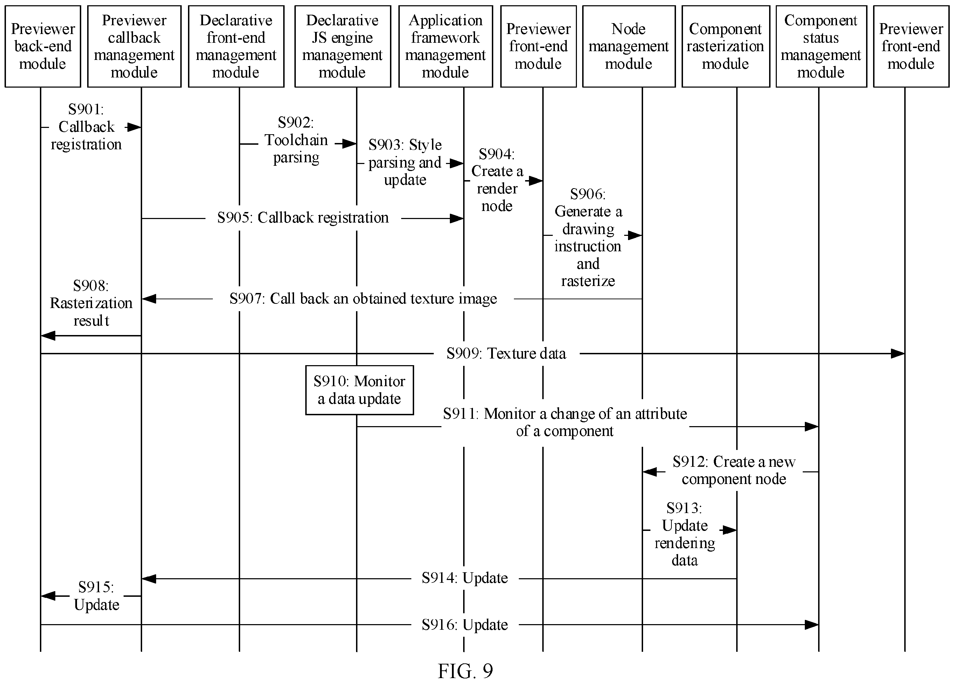

FIG. 9 is a schematic flowchart of a component preview method 900 according to an embodiment of this application. The method 900 is described below in detail with reference to FIG. 9.

S901: A previewer back-end module registers a callback with a previewer callback management module.

S902: A declarative front-end management module sends a toolchain parsing result to a declarative JS engine management module.

S903: The declarative JS engine management module sends a style parsing result and an updated result to an application framework management module.

S904: The application framework management module sends a created render node to a node management module.

S905: The previewer callback management module registers a callback with the application framework management module.

It should be understood that, when component preview is enabled, the declarative JS engine management module parses code written by a developer, that is, a compilation toolchain of an operating system preprocesses the code, for example, preprocesses a decorator @Preview. The declarative front-end management module loads an executable file (JS Bundle) of a preview component. The declarative front-end management module sends a parsed result to the application framework management module. The application framework management module performs binding on a component marked with @Preview, and registers a rendering texture data callback with the previewer back-end module. The application framework management module sends the component and attribute information of the component to the node management module. The node management module creates a component node, an element node, and a render node corresponding to the component marked with @Preview.

S906: The node management module sends a generated drawing instruction and a result obtained through rasterization to a component rasterization module.

S907: The component rasterization module calls back an obtained texture image from the previewer callback management module.

S908: The previewer callback management module distributes the rasterization result to the previewer back-end module.

S909: The previewer back-end module sends texture data to the previewer front-end module.

For example, the node management module sends the generated drawing instruction to the component rasterization module. The component rasterization module determines the texture image according to the drawing instruction. Further, the component rasterization module sends the texture image to the previewer callback management module. The previewer callback management module asynchronously sends the texture image to the previewer back-end module, and the previewer back-end module may send the texture image to the previewer front-end module through IPC. The previewer front-end module displays an image of the preview component on a screen.

It should be noted that the foregoing steps are a process in which data has not changed. A render node and a layout corresponding to the preview component are calculated based on a component actually to be previewed. The preview component is separately rasterized to generate the texture image. Finally, the preview image corresponding to the preview component may be separately displayed on a previewer. When the data changes, an electronic device may perform the following steps to implement dynamic component preview.

S910: The declarative JS engine management module monitors a data update.

S911: The declarative JS engine management module sends a detected change of an attribute of the component to a component status management module.

S912: The component status management module sends a newly created component node to the node management module.

S913: The node management module sends updated rendering data to the component rasterization module.

S914: The component rasterization module sends the updated rendering data to the previewer callback management module.

S915: The previewer callback management module sends the updated rendering data to the previewer back-end module.

S916: The previewer back-end module sends an updated rendering texture image to the previewer front-end module.

For example, when a developer clicks an area bound to the preview component, the declarative front-end management module learns that data on a JS side has changed and the attribute of the component has changed, and triggers a corresponding data binding function (getter/setter function). Further, the declarative front-end management module notifies the component status management module of the foregoing obtained content. The component status management module associates the data with the changed component and re-creates a corresponding component node. The component status management module sends the re-created component node to the node management module. The node management module updates information about the element node, and further sends the information about the element node to the component rasterization module. The component rasterization module regenerates a drawing instruction, re-rasterizes the drawing instruction, generates an updated texture image, and sends the rendering result to the previewer callback management module. The previewer callback management module asynchronously sends the rendering result to the previewer back-end management module. Finally, the previewer back-end management module distributes the rendering result (texture image) to the previewer front-end module through IPC, and the previewer front-end module updates the image of the preview component and displays the image on the screen.

It can be learned that this embodiment of this application provides the component preview method. First, the drawing instruction corresponding to the preview component (the component marked with @Preview) may be separately rasterized to obtain the texture image corresponding to the preview component, and the preview image corresponding to the preview component is finally displayed on the screen. According to the method, preview images corresponding to a plurality of stacked-up components can be separately displayed, and component preview efficiency is improved. Second, according to the method, the component is associated with the data. When the data changes, the component node associated with the data is re-created, and the information about the element node and the rendering information (rendering data) are updated, to generate the corresponding drawing instruction (rendering instruction) and rasterize the regenerated drawing instruction to obtain the texture image. According to the method, the preview component can be dynamically previewed, so that the developer can obtain a display effect of the preview component in real time when previewing the component, to further improve component preview efficiency. Third, according to this method, only a layout of the preview component (the component marked with @Preview) needs to be calculated to generate the drawing instruction, and not all components on a page need to be processed. This avoids impact of another component that does not need to be previewed during preview component processing and improves a component preview speed.

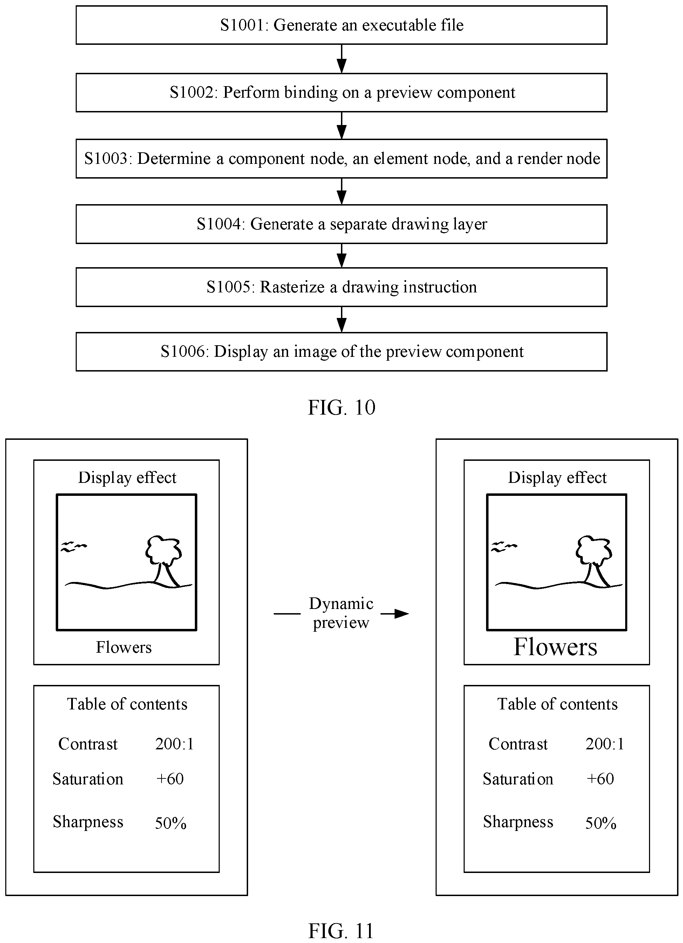

FIG. 10 is a schematic flowchart of a component preview method 1000 according to an embodiment of this application. The method 1000 is described below in detail with reference to FIG. 10.

S1001: Generate an executable file.

It should be understood that application UI code written by a developer is compiled by using a toolchain. For example, a decorator (@Preview) is parsed, and the application UI code is compiled to obtain the executable file. For example, the executable file is JS Bundle that includes instruction information about how to build a component interface.

S1002: Perform binding on a preview component.

It should be understood that a node management module in an electronic device binds an attribute and a method to the component marked with @Preview, and sends the component marked with @Preview to an entry (for example, loadDocument) of the preview component.

S1003: Determine a component node, an element node, and a render node.

It should be understood that a C++ preview component node of the preview component may be generated through a JS-to-C++ cross-language interface, and the element node is generated by using the preview component. The element node may be used to connect the component and the render node, and is further used for a local update when data changes. Generally, a corresponding render node is created for each element node that can be displayed. Each render node corresponds to display information of one preview component node, and each render node is used to maintain information required by the corresponding preview component node during rendering. The information includes a layout, a drawing instruction, and the like.

For example, when the data changes, the data is associated with the changed preview component, a new preview component node is re-created for the preview component, and information about the element node and information about the corresponding render node are updated. In other words, when the data changes, the drawing instruction of the preview component associated with the data also changes. In this case, the following steps are then performed to implement dynamic component preview.

S1004: Generate a separate drawing layer.

It should be understood that corresponding drawing context is created in a drawing function of the render node corresponding to the preview component, to generate the separate drawing layer. A canvas may be further provided in the drawing layer. The canvas is used to record drawing information corresponding to the preview component node. The drawing information may include a layout, a color, a drawing instruction, and the like.

S1005: Rasterize the drawing instruction.

It should be understood that, a drawing instruction corresponding to each preview component node is rasterized. Specifically, a drawing instruction in DisplayList is rasterized. DisplayList is a buffer for buffering the drawing instruction, and the buffer records a sequence of drawing instructions to be executed. For example, a color value of a pixel is generated in a pixel buffer (the pixel may be stored in a computer graphics memory for a texture). A texture image corresponding to the preview component node is obtained through the rasterization. A previewer callback event is further triggered, and the texture image (texture data) may be transmitted to previewer back-end by using a callback function.

It should be understood that an object of the rasterization is the drawing instruction corresponding to the preview component node. First, not all components are rasterized, but only a component that a developer needs to preview is rasterized. In addition, because each preview component node has a corresponding render node, the drawing instruction is also in a one-to-one correspondence with the preview component. Therefore, the drawing instruction may be separately rasterized to generate the texture image corresponding to the preview component. A texture image corresponding to each preview component is also separate.

S 1006: Display an image of the preview component.

It should be understood that the previewer back-end may transmit, through IPC, the texture image corresponding to the preview component to previewer front-end. The previewer front-end sends the texture image (rendering result) to a synthesizer. The synthesizer further sends related data of the texture image to a frame buffer, and a display may read the related data of the texture image from the frame buffer and finally display the image of the preview component on a screen.

For ease of understanding, a specific instance of the component preview method provided in this embodiment of this application is described below by using an example in which the preview component is a text component. A code snippet is as follows:

```
          @Preview
          @Component
          struct Index {
            @state val : string = 'Good morning'
           build () {
              Text (this. val)
                .fontSize (30)
                .onClick ( (e) ) = > {
                this. val = 'Good afternoon'
                } )
          } }
```

The foregoing code snippet includes one text component, and initially display of the text component is "Good morning". When a developer clicks a preview image corresponding to the preview text component, a corresponding data binding function (getter/setter function) is triggered to associate new text content with the changed component. In addition, a preview component node corresponding to the changed component is re-created, information about an element node and information about a corresponding render node are updated, and a drawing instruction is generated. The drawing instruction is re-rasterized to generate an updated texture image, and an updated preview image corresponding to the text component is finally displayed in an interface of the previewer. As shown in the foregoing code, a result "Good afternoon" is displayed.

For ease of understanding, FIG. 11 is a diagram of a component preview effect according to an embodiment of this application. When a developer clicks a preview image (content is "Flowers") corresponding to a text component, a font of the text becomes larger and is directly displayed in a preview interface. It can be learned that, according to the component preview method provided in embodiments of this application, as data is bound to a component, when the data changes (for example, with a click of a developer on a preview image corresponding to the preview component), an interface update of the preview component is triggered, and a preview image corresponding to the preview component after the update is directly displayed. An attribute of the preview component can be dynamically changed, and there is no need to perform recompilation to obtain an executable file, so that the preview image corresponding to the preview component with the changed attribute can be directly rendered during runtime.

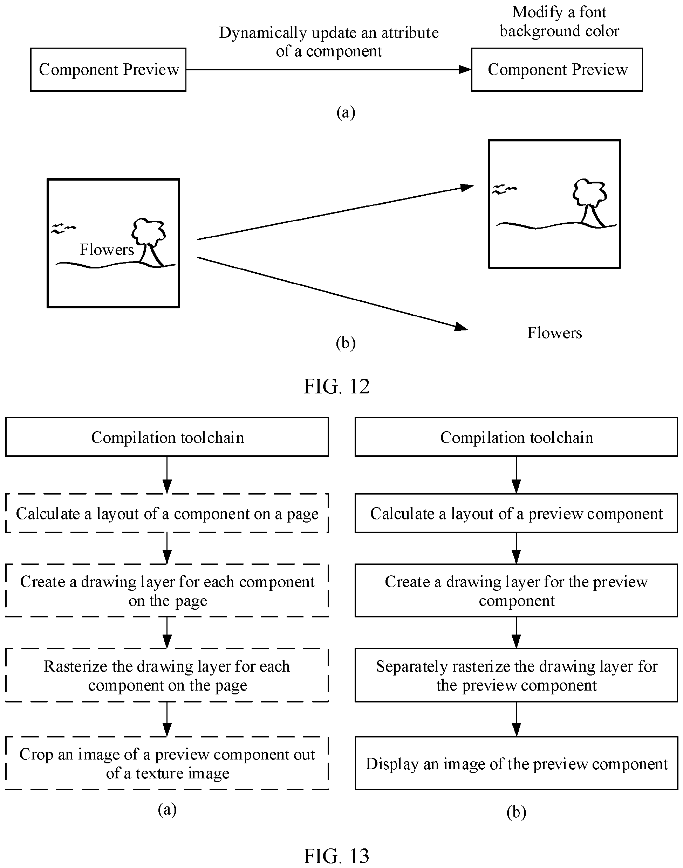

For ease of understanding, FIG. 12 is a diagram of another component preview effect according to an embodiment of this application. As shown in FIG. 12(a), a preview component is a text component (content is "Component Preview"). When a change of data is detected, automatic perception of a change of a text background color of the text component is implemented, and a corresponding minimal update range of a preview component is determined, so that the text background color of the text component can be modified in real time. As shown in FIG. 12(b), a preview component includes an image component (content is a landscape picture) and a text component (content is "Flowers"). The image component and text component are stacked up. Separate drawing layers are created for the image component and the text component respectively and separately rasterized to obtain texture images, and the obtained texture images are distributed to a previewer. Finally, a preview image corresponding to the image component and a preview image corresponding to the text component that are stacked up can be separately displayed.

Further, for ease of understanding further improvement of the component preview method provided in embodiments of this application, FIG. 13 is a diagram of comparison between two component preview methods. FIG. 13(b) shows a component preview method according to an embodiment of this application. Steps in dotted boxes are differences between the two methods. Both methods need to compile code written by a developer to obtain an executable file. Subsequently, an electronic device processes only a preview component instead of all components. Specifically, the electronic device calculates a layout of a selected preview component, further generates a drawing layer corresponding to the preview component and a corresponding drawing instruction, and rasterizes the drawing instruction, to obtain a texture image. Finally, an image of the preview component can be separately displayed on a previewer. However, in a conventional solution, all components are drawn in a same layer, and an object of rasterization is only the same layer. If a part of the components needs to be displayed, an obtained texture image needs to be cropped. As a result, the cropped image may not be able to fully show all components.

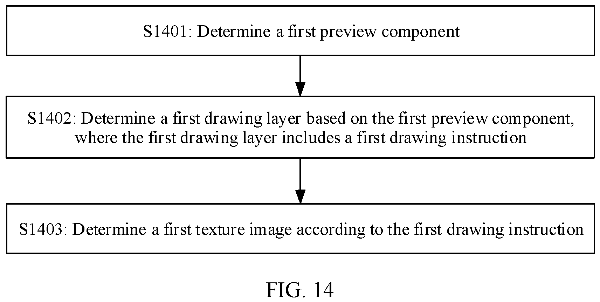

FIG. 14 shows a component preview method 1400 according to an embodiment of this application. The method may be applied to the system architecture of the electronic device shown in FIG. 8. Steps are specifically described below.

S1401: Determine a first preview component based on a code file.

It should be understood that the code file includes a plurality of components, and the first preview component is one of the plurality of components. In other words, the first preview component is selected from the plurality of components. A compilation toolchain of an operating system preprocesses the code file to generate an executable file (JS Bundle). For example, a component marked with @Preview in the code file is considered as a preview component.

It should be noted that the preview component is selected from the plurality of components in the code file, so that subsequent processing needs to be performed only on the preview component. This improves a speed and efficiency of component preview. In addition, impact on a preview component processing process due to processing on another component that does not need to be previewed can be avoided as much as possible, to improve a component preview effect.

S1402: Determine a first drawing layer based on the first preview component, where the first drawing layer includes a first drawing instruction.

It should be understood that a corresponding drawing layer is generated for each preview component. In other words, drawing layers corresponding to various preview components are separate from each other. As the separate drawing layer is determined, it is clear that a subsequent object (the drawing instruction in the drawing layer) to be processed is also separate, so that a final full preview effect of a preview component can be further obtained. In this way, a preview result obtained by using the component preview method provided in this embodiment of this application is more accurate, and component preview efficiency is improved for developers.

In some embodiments, a first component node is determined based on the first preview component, where the first component node is used to represent data of the first preview component; a first element node is determined based on the first component node; a first render node is determined based on the first element node, where the first element node is used to associate the first component node with the first render node; and the first drawing layer is determined based on the first render node, where the first drawing instruction in the first drawing layer is determined by the first render node.

It should be understood that the data of the first preview component may be one or more of an attribute, an event, or a method of the first preview component. The data of the first preview component may be used to describe an appearance of the first preview component. An element node (the first element node) corresponding to the first preview component may be used to create a corresponding render node (the first render node). There is a correspondence among the component node, the element node, and the render node. The render node may be used to determine a corresponding drawing layer and drawing instruction, and the drawing instruction may be carried on the drawing layer. The render node may be further used to maintain rendering information (or drawing information), including layout information, a drawing instruction, and the like, of a corresponding preview component.

In some embodiments, first layout information is determined based on the first render node, where the first layout information includes first size information or first location information, and the first drawing layer includes the first layout information.

It should be understood that the layout information indicates an initial size or location of a preview component. The layout information may be obtained by the electronic device through calculation, or may be an initial value set by default. This is not specifically limited in this application. Both the layout information and the drawing instruction may be located in a drawing layer.

S1403: Determine a first texture image according to the first drawing instruction.

In some embodiments, a second preview component is determined based on the code file, where the second preview component is one of the plurality of components, and the second preview component is different from the first preview component; a second drawing layer is determined based on the second preview component, where the second drawing layer is different from the first drawing layer, and the second drawing layer includes a second drawing instruction; and a second texture image is determined according to the second drawing instruction.

It should be understood that the second preview component is another component marked with @Preview in the code file in addition to the first preview component. The electronic device may further process the second preview component, and a created drawing layer corresponding to the second preview component and the drawing layer corresponding to the first preview component are separate drawing layers. In other words, drawing layers corresponding to different preview components are separate. The electronic device may process drawing instructions in separate drawing layers to obtain different texture images. A process of processing a drawing instruction to obtain a texture image is rasterization.

In some embodiments, a first preview image is displayed based on the first texture image; or a second preview image is displayed based on the second texture image.

It should be understood that preview images corresponding to different preview components are displayed in a component preview interface. The preview images corresponding to the different preview components are not cropped out of a same preview image, but are obtained by processing each separate drawing layer. Therefore, according to the component preview method provided in this embodiment of this application, the preview images corresponding to the different preview components can be fully displayed. When a plurality of components are stacked up, mutual impact among the plurality of components can be avoided, to fully and accurately display a preview image corresponding to each of the stacked-up components.

In some embodiments, the first preview component is bound to the data of the first preview component; when a change of the data of the first preview component is detected, a second component node is determined based on the change of the data of the first preview component; a second element node is determined based on the second component node; a second render node is determined based on the second element node, where the second element node is used to associate the second component node with the second render node; second layout information is determined based on the second render node, where the second layout information includes second size information or second location information; and a third drawing layer is determined based on the second render node, where the third drawing layer includes a third drawing instruction and the second layout information, and the third drawing instruction is determined by the second render node.

In some embodiments, the change of the data is associated with the first preview component in response to an operation of a developer on the first preview image; and when the change of the data is associated with the first preview component, the change of the data of the first preview component is detected.

In some embodiments, a third texture image is determined according to the third drawing instruction, where the third texture image is different from the first texture image.

In some embodiments, a third preview image is displayed based on the third texture image, where the third preview image is an image obtained by updating the first preview image.

It should be understood that the preview component is bound to data of the component. When the data of the preview component changes, a component node corresponding to the preview component is recreated, the corresponding element node and render node are updated, and the layout information and the drawing instruction are further updated. A texture image is regenerated according to the updated drawing instruction, to obtain a preview image after the data of the preview component is updated.

It should be noted that the element node may be further used to update data. In other words, when data of a preview component changes, the element node correspondingly updates the changed data to the render node, to rebind the render node to the changed data.

In some embodiments, the first drawing layer includes a first canvas, and the first canvas includes the first layout information and the first drawing instruction; and the third drawing layer includes a second canvas, and the second canvas includes the second layout information and the third drawing instruction.

According to the component preview method provided in this embodiment of this application, the preview component is selected, a separate drawing layer is generated for each preview component, and a drawing instruction in the separate drawing layer corresponding to each preview component is rasterized, to obtain and display a texture image corresponding to the preview component. When a plurality of stacked-up components need to be previewed, a drawing layer corresponding to each preview component can be separately processed, so that the stacked-up different preview components can be fully previewed. In addition, the preview component may be further bound to the data. When a change of the data is detected, related drawing information of the preview component is updated in real time, so that the preview image corresponding to the preview component can be updated in real time as the data changes. In this way, a developer can dynamically learn a change of a preview effect of the preview component. Further, according to the component preview method in this application, only the preview component is processed, and not all components on a page need to be processed. In this way, the electronic device can process the layout information or the drawing information of the preview component as required, and can also avoid impact of a component that does not need to be processed on the preview component, to improve a component preview speed and a preview effect.

An embodiment of this application provides a computer program product. When the computer program product is run on an electronic device, the electronic device is enabled to perform the technical solutions in the foregoing embodiments. An implementation principle and technical effects thereof are similar to those of the foregoing method-related embodiments. Details are not described herein again.

An embodiment of this application provides a readable storage medium. The readable storage medium includes instructions. When the instructions are run on an electronic device, the electronic device is enabled to perform the technical solutions in the foregoing embodiments. Implementation principles and technical effects thereof are similar. Details are not described herein again.

An embodiment of this application provides a chip. The chip is configured to execute instructions. When the chip is run, the technical solutions in the foregoing embodiments are performed. Implementation principles and technical effects thereof are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation is beyond the scope of embodiments of this application.

It can be clearly understood by a person skilled in the art that, for convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling, direct coupling, or communication connection may be implemented through some interfaces. The indirect coupling or the communication connection between the apparatuses or units may be implemented in electronic, mechanical, or another form.

The units described as separate parts may or may not be physically separate, and parts displayed as units may or may not be physical units, and may have one location, or may be distributed over a plurality of network units. All or some of the units may be selected based on an actual requirement, to achieve the objectives of the solutions of embodiments.

In addition, the functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in embodiments of this application essentially, or the part contributing to the prior art, or some of the technical solutions may be implemented in a form of a software product. The computer software product is stored in a storage medium, and includes several instructions for instructing a computer device (that may be a personal computer, a server, a network device, or the like) to perform all or some of the steps in the foregoing method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A component preview method, wherein the method is applied to an electronic device and comprises:
determining a first preview component based on a code file, wherein the code file comprises a plurality of components, and the first preview component is one of the plurality of components;
determining a first drawing layer based on the first preview component, wherein the first drawing layer comprises a first drawing instruction; and
determining a first texture image according to the first drawing instruction.

2. The method according to claim 1, wherein the method further comprises:
determining a second preview component based on the code file, wherein the second preview component is one of the plurality of components, and the second preview component is different from the first preview component;
determining a second drawing layer based on the second preview component, wherein the second drawing layer is different from the first drawing layer, and the second drawing layer comprises a second drawing instruction; and
determining a second texture image according to the second drawing instruction.

3. The method according to claim 2, wherein the method further comprises:
displaying a first preview image based on the first texture image; or
displaying a second preview image based on the second texture image.

4. The method according to any one of claims 1 to 3, wherein the determining a first drawing layer based on the first preview component comprises:
determining a first component node based on the first preview component, wherein the first component node is used to represent data of the first preview component;
determining a first element node based on the first component node;
determining a first render node based on the first element node, wherein the first element node is used to associate the first component node with the first render node; and
determining the first drawing layer based on the first render node, wherein the first drawing instruction in the first drawing layer is determined by the first render node.

5. The method according to claim 4, wherein before the determining the first drawing layer based on the first render node, the method further comprises:
determining first layout information based on the first render node, wherein the first layout information comprises first size information or first location information, and the first drawing layer comprises the first layout information.

6. The method according to any one of claims 1 to 5, wherein the method further comprises:
binding the first preview component to the data of the first preview component;
when a change of the data of the first preview component is detected, determining a second component node based on the change of the data of the first preview component;
determining a second element node based on the second component node;
determining a second render node based on the second element node, wherein the second element node is used to associate the second component node with the second render node;
determining second layout information based on the second render node, wherein the second layout information comprises second size information or second location information; and
determining a third drawing layer based on the second render node, wherein the third drawing layer comprises a third drawing instruction and the second layout information, and the third drawing instruction is determined by the second render node.

7. The method according to claim 6, wherein the method further comprises:
determining a third texture image according to the third drawing instruction, wherein the third texture image is different from the first texture image.

8. The method according to claim 7, wherein the method further comprises:
displaying a third preview image based on the third texture image, wherein the third preview image is an image obtained by updating the first preview image.

9. The method according to any one of claims 6 to 8, wherein that a change of the data of the first preview component is detected comprises:
associating the change of the data with the first preview component in response to an operation of a developer on the first preview image; and
when the change of the data is associated with the first preview component, detecting the change of the data of the first preview component.

10. The method according to any one of claims 6 to 9, wherein the first drawing layer comprises a first canvas, and the first canvas comprises the first layout information and the first drawing instruction; and
the third drawing layer comprises a second canvas, and the second canvas comprises the second layout information and the third drawing instruction.

11. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the following steps:
determining a first preview component based on a code file, wherein the code file comprises a plurality of components, and the first preview component is one of the plurality of components;
determining a first drawing layer based on the first preview component, wherein the first drawing layer comprises a first drawing instruction; and
determining a first texture image according to the first drawing instruction.

12. The electronic device according to claim 11, wherein when the instructions are executed by the one or more processors, the electronic device is enabled to perform the following steps:
determining a second preview component based on the code file, wherein the second preview component is one of the plurality of components, and the second preview component is different from the first preview component;
determining a second drawing layer based on the second preview component, wherein the second drawing layer is different from the first drawing layer, and the second drawing layer comprises a second drawing instruction; and
determining a second texture image according to the second drawing instruction.

13. The electronic device according to claim 12, wherein when the instructions are executed by the one or more processors, the electronic device is enabled to perform the following steps:
displaying a first preview image based on the first texture image; or
displaying a second preview image based on the second texture image.

14. The electronic device according to any one of claims 11 to 13, wherein the determining a first drawing layer based on the first preview component comprises: when the instructions are executed by the one or more processors, the electronic device is enabled to perform the following steps:
determining a first component node based on the first preview component, wherein the first component node is used to represent data of the first preview component;
determining a first element node based on the first component node;
determining a first render node based on the first element node, wherein the first element node is used to associate the first component node with the first render node; and
determining the first drawing layer based on the first render node, wherein the first drawing instruction in the first drawing layer is determined by the first render node.

15. The electronic device according to claim 14, wherein before the determining the first drawing layer based on the first render node, when the instructions are executed by the one or more processors, the electronic device is enabled to perform the following steps:
determining first layout information based on the first render node, wherein the first layout information comprises first size information or first location information, and the first drawing layer comprises the first layout information.

16. The electronic device according to any one of claims 11 to 15, wherein when the instructions are executed by the one or more processors, the electronic device is enabled to perform the following steps:
binding the first preview component to the data of the first preview component;
when a change of the data of the first preview component is detected, determining a second component node based on the change of the data of the first preview component;
determining a second element node based on the second component node;
determining a second render node based on the second element node, wherein the second element node is used to associate the second component node with the second render node;
determining second layout information based on the second render node, wherein the second layout information comprises second size information or second location information; and
determining a third drawing layer based on the second render node, wherein the third drawing layer comprises a third drawing instruction and the second layout information, and the third drawing instruction is determined by the second render node.

17. The electronic device according to claim 16, wherein when the instructions are executed by the one or more processors, the electronic device is enabled to perform the following steps:
determining a third texture image according to the third drawing instruction, wherein the third texture image is different from the first texture image.

18. The electronic device according to claim 17, wherein when the instructions are executed by the one or more processors, the electronic device is enabled to perform the following steps:
displaying a third preview image based on the third texture image, wherein the third preview image is an image obtained by updating the first preview image.

19. The electronic device according to any one of claims 16 to 18, wherein that a change of the data of the first preview component is detected comprises: when the instructions are executed by the one or more processors, the electronic device is enabled to perform the following steps:
associating the change of the data with the first preview component in response to an operation of a developer on the first preview image; and
when the change of the data is associated with the first preview component, detecting the change of the data of the first preview component.

20. The electronic device according to any one of claims 16 to 19, wherein the first drawing layer comprises a first canvas, and the first canvas comprises the first preview component, the first layout information, and the first drawing instruction; and
the third drawing layer comprises a second canvas, and the second canvas comprises the second layout information and the third drawing instruction.

21. A computer-readable storage medium, wherein the computer-readable storage medium comprises a computer program or instructions, and when the computer program or the instructions are run on a computer, the method according to any one of claims 1 to 10 is performed.

22. A computer program product, wherein the computer program product comprises a computer program or instructions, and when the computer program or the instructions are run on a computer, the method according to any one of claims 1 to 10 is performed.
